# EUROPEAN PATENT APPLICATION

(11) **EP 4 429 234 A1**
(43) Date of publication of application: **11.09.2024**
(21) Application number: 24162504.5
(22) Date of filing: 08.03.2024
(51) Int. Cl.: H04N 13/243, H04N 23/695, H04N 23/698, H04N 23/90

(54) **IMAGE CAPTURING SYSTEM AND METHOD**

(30) Priority: 10.03.2023 US 202318182269
(71) Applicant: TMRW Foundation IP SARL, 2310 Luxembourg (LU)
(72) Inventor: YERLI, Cevat, Dubai (AE); MANZANERA LIDÓN, Jesús, 03295 Elche (ES)
(74) Representative: Dentons UK and Middle East LLP

(57) **Abstract**

A system comprises a primary camera and secondary cameras configured to capture images of a scene having a target, and a control unit connected to and receiving parameters from the cameras and configured to automatically select and activate the cameras and to allocate the target to the cameras. When the primary camera is allocated the target, the primary camera locks on and tracks the target. When the target is in a field of view of a first secondary camera, the control unit activates and controls the first secondary camera to track the target. When the target moves out of the field of view of the first secondary camera and into a field of view of a second secondary camera, the control unit deactivates the first secondary camera and activates and controls the second secondary camera to track the target. The cameras are configured to capture different views of the target.

## Description

### FIELD

The present disclosure relates to image capturing systems and methods of operating such systems. More particularly, the disclosure relates to image capturing systems employing a plurality of cameras (image capturing devices) to produce images of targets from various locations.

### BACKGROUND

In the recording or broadcasting of a scene, it is frequently desirable to replay portions of the events for further analysis and/or to enhance the viewing experience. By replaying videos taken by different cameras located at different locations, it may be possible to obtain a better view of the event. For example, in the case of the recording and broadcast of a soccer match it may not be clear from the camera originally selected whether the soccer ball (target) remained in the playing field at certain stage of the game. By choosing the recording of a different camera at a different location when using the instant replay feature a better view may be obtained of whether the ball remained in the playing field.

In the telecast of live sports events, targets (such as a ball or player) are often in motion. Traditional television covering systems typically use six cameras to cover a sports event like a tennis match. Each camera requires a camera operator. As each camera is generally focused on where the main action is perceived to take place, not every aspect of the event is captured and recorded.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In one aspect of the current disclosure, an image capturing system for controlling a plurality of cameras is provided. The system comprises a primary camera configured to capture images of a scene having a target; first and second secondary cameras configured to capture images of the scene; and a control unit connected to and receiving parameters from the cameras and configured to automatically select and activate the cameras and to allocate the target to the cameras. When the primary camera is allocated the target in the scene, the primary camera locks on and tracks the target. Responsive to the target being in a field of view of the first secondary camera, the control unit activates and controls the first secondary camera to track the target. Responsive to the target moving out of the field of view of the first secondary camera and into a field of view of the second secondary camera, the control unit deactivates the first secondary camera and activates and controls the second secondary camera to track the target. The cameras are configured to capture different views of the target. In this manner, the system automatically obtains images via the primary camera and the activated secondary cameras, maximizing the area of coverage of the target and a more elaborate coverage of the scene.

The system may include more than one primary camera. In some embodiments, the system includes a second primary camera configured to capture images of the scene, and the system is configured to capture images of multiple targets simultaneously.

In one embodiment, each target is allocated a control data unit that connects to corresponding cameras, the control data units being configured to provide parameters of each camera to the control unit.

In some embodiments, when a conflict arises between two control units over the activation and control of a secondary camera, the conflict may be resolved by priority rules. The priority rules may cause activation of a secondary camera to be determined by, e.g., the relative distance between the targets and the secondary cameras, or profile data of the target, or combinations thereof. The target may be a participant in a scene or equipment used in a scene. The obtained images may be stored on a storage unit. In some embodiments, the system further comprises one or more virtual cameras configured to provide camera views interpolated from views obtained by one or more of the primary or secondary cameras. The obtained images may be combined to form a full 360 degree panoramic view of a target. The background of the images of the image capturing devices may be removed and then further processed.

In some embodiments, the images may be further processed and transferred into a virtual environment rendered by a receiving device. In these embodiments, the combined images are sent to a processing device, which may be a server. The server may perform the further processing on the images before sending to a receiving device, which may be render a virtual environment and display the combined images in the virtual environment.

In some embodiments, the primary camera comprises computer circuitry (e.g., processor, memory, network interface, etc.) programmed to cause the primary camera or some other device to perform tasks. In one embodiment, the primary camera comprises computer circuitry programmed to combine the images to form a panoramic view of the target and to send the combined image to a server for further processing, to remove background from the images, to transfer the images into a virtual environment rendered by a receiving device, or a combination of such tasks or other tasks.

In some embodiments, activation and deactivation of the cameras are performed by a switching device in communication with the control unit.

In some embodiments, the control unit may be located within the primary camera.

In some embodiments, the cameras are configured to capture depth information. For example, a camera may contain a depth image capturing device and be configured to generate 3D meshes.

In another aspect of the current disclosure, a method for controlling a plurality of cameras is provided. The method comprises allocating a target in a scene to a primary camera configured to capture images of the scene; locking on to and tracking the target; reading, by a control unit, the parameters of the primary camera and of first and second secondary cameras configured to capture images of the scene; responsive to the target being in a field of view of the first secondary camera, activating and controlling the first secondary camera to track the target; responsive to the target moving out of the field of view of the first secondary camera and into a field of view of the second secondary camera, deactivating the first secondary camera and activating and controlling the second secondary camera to track the target; and automatically obtaining images with the cameras to capture different views of the target.

In some embodiments, the method further comprises allocating a second target in the scene to a second primary camera; and capturing images of the targets simultaneously. In one embodiment, the method further comprises allocating a control data unit that connects to corresponding cameras; and providing, by the control data unit, parameters of each camera to the control unit. In a further embodiment, the method further comprises providing priority rules configured to resolve conflicts over activation and control of the secondary cameras. In an illustrative scenario, conflict between two data control units over the activation and control of a secondary camera is resolved by priority rules. In yet a further embodiment, the priority rules resolve conflicts based on the relative distance between the target and the secondary cameras, or profile data of the target, or combinations thereof.

In one embodiment, the method further comprises providing a switching device connected to the control unit and being configured to activate and deactivate the cameras.

In one embodiment, the method further comprises storing the obtained images on a storage unit.

In one embodiment, the method further comprises implementing one or more virtual cameras configured to provide camera views interpolated from views obtained by one or more of the primary or secondary cameras.

In one embodiment, the method further comprises combining the images to form a full 360 degree panoramic view of a target.

In one embodiment, the method further comprises removing the background of the images of the image capturing devices and further processing the images. In a further embodiment, the method comprises further comprises transferred the further process images into a virtual environment rendered by a receiving device.

In one embodiment, the method further comprises providing at least one depth image capturing device on a camera configured to generate 3D meshes.

The present disclosure also includes non-transitory computer readable media (e.g., volatile or non-volatile physical memory, storage media, or the like) having stored thereon computer-executable instructions configured to, when executed, cause one or more computing devices to perform steps according to methods described herein.

The above summary does not include an exhaustive list of all aspects of the present disclosure. It is contemplated that the disclosure includes all systems and methods that can be practiced from all suitable combinations of the various aspects summarized above, as well as those disclosed in the Detailed Description below, and particularly pointed out in the claims filed with the application. Such combinations have advantages not specifically recited in the above summary. Other features and advantages will be apparent from the accompanying drawings and from the detailed description that follows below.

### BRIEF DESCRIPTION OF THE DRAWINGS

**Fig. 1** is a schematic representation of an exemplary image capturing system according to an embodiment of the present disclosure.
**Fig. 2** is a schematic representation of a system with one image capturing control system according to an embodiment of the present disclosure.
**Fig. 3** is a schematic representation of a system with three image capturing control systems according to an embodiment of the present disclosure.
**Fig. 4** is a flow chart of a method of controlling a plurality of cameras according to an embodiment of the present disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

The present disclosure discloses a system and method for controlling a plurality of variable pointing cameras (image capturing devices). In embodiments of the present disclosure, cameras lock-on and track targets to follow the movements of particular targets. The pointing of the camera then varies as it tracks the target. By tracking the target, the target is then located in the center of the view region of the camera and so a clearer close up view of the target is obtained. It is also desirable that several cameras from different locations track a target so that a clearer all around panoramic view of the target can be obtained. These views can then be recorded, and video clips obtained therefrom. When replaying video clips of targets in as sporting event, the targets can be viewed from multiple locations. The systems, cameras, control units, and other devices disclosed herein may include, in various embodiments, computers or embedded computing circuitry (e.g., processor, memory, storage media, network interface, etc.).

Described cameras may include a camera capturing images in the visual spectrum, Lidar that operates in the laser range, a thermal imaging device or any other similar device irrespective of its operating frequency range. Described cameras also may include a capturing device capable of capturing depth information as well as geometric information. Also included is a depth capturing device capable of generating 3D meshes.

In some embodiments, the system includes one or more primary cameras and one or more secondary cameras positioned around a scene.

A scene may be a sporting event, a play in a theater, a concert, an area that is monitored for security purposes, or the like. The system can also be used in video conferencing, in which case the scene may be meeting or other gathering. The cameras have parameters which can be read by a control unit. The parameters of the cameras include movement parameters such as pan and tilt, as well as lens parameters such as zoom, lens opening, focus, shutter speed and frame rate. A scene can have one or more targets. A target can be a participant in a scene, equipment used in the scene, or some other object. Equipment includes a ball, an ice hockey puck, a gaming projectile like a dart or a spear, or anything else may be used in a game or performance.

For example, in soccer each side has 11 players which gives a total of 22 players, a referee and two linesmen. This gives a total of 25 participants. A target can also be a zone or a general area around a participant or a game item like a ball. So, in the case of a soccer sporting event, there may be 26 targets. Each target may be allocated to a primary camera. This means the primary camera locks-on to the target and tracks the target. So, in the soccer example above 26 primary cameras may be allocated to the 26 targets. The targets in the scene are generally dynamic or moving. There may be brief moments where the player, ball, referee or linesman are stationary but generally the targets will be dynamic or moving in the scene. In some embodiments, a switching unit is connected to the cameras and the control unit controls the cameras and the switching unit.

The control unit reads parameters of the primary camera. The parameters of the primary camera contain information as to the location of the target. In this manner, the control unit obtains the location information of the target that the primary camera is tracking.

The control unit can also be given details of the target that the primary camera is tracking. For example, in the case of a soccer game, the control unit may be provided with information on whether the target is a player, the ball, a referee or a linesman. Some target types may have additional information associated with them. If the target is a player, the control unit may be provided with information on the side on which the player is and the position he plays. Other information such as the players' name and number of the player may also be provided to the control unit. The control unit activates and controls one or more secondary cameras. The control unit may be provided with the location of the secondary cameras around the scene as well as their field of view (capture area).

The activation and control of secondary cameras depends on whether the target is in the field of view of the secondary camera and according to priority rules. The secondary camera or cameras are used to track and capture one or more views or parts of the target not fully captured by the primary camera. This results in the primary camera in combination with the activated secondary cameras increasing the area of coverage of a target, such as with a more all-around panoramic view of 360 degrees of the target.

In an illustrative scenario, the control unit activates in combination with the primary camera three secondary cameras so that four sides of a target are covered. In some embodiments, for each target, an all-around panoramic view of the target is captured.

Priority rules are used when there is conflict between two control units over activation and control of one or more secondary device(s). In some embodiments, the secondary cameras closest to the target will be activated to obtain an all-around panoramic view of the target. It may happen, however, that two or more targets are so close together in a scene that conflict may arise as to which secondary cameras should be activated for each target. So, in a soccer game, it may happen that the ball and a player are so close together on the playing field that conflict arises over the activation of a specific secondary camera. The potential secondary cameras to be activated are of equal distance from the ball and the player. One way to resolve this is to have a priority rule that the ball target gets preference as it is the main object of interest and generally where the main action is. Under such a priority rule, the secondary camera closest to the ball is activated. The next in line or closest secondary camera to the player gets activated to cover the player in more detail.

The output of the multiple cameras, that is, the video feeds of the cameras, may be stored on a storage unit. Multiple video feeds may thereafter be played back from the storage unit. It may be further edited to produce replays with the functionality to rotate around the target as the target is in motion.

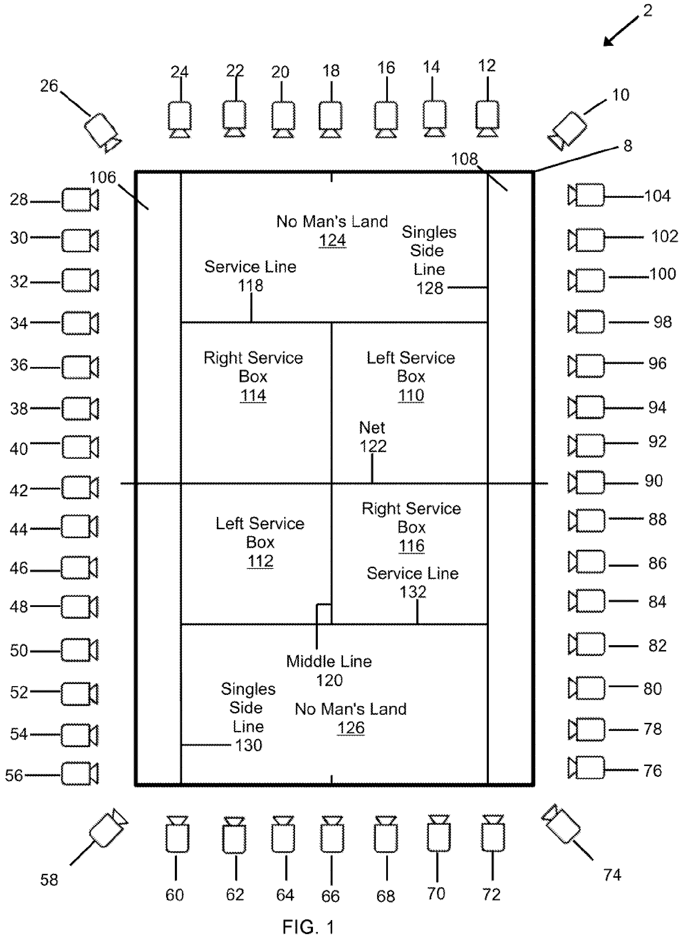

**Fig. 1** is a schematic representation of an exemplary image capturing system **2** where the scene is a tennis court **8.** Variable pointing cameras **10 to 104** are positioned around tennis court **8.** Tennis court **8** is divided in a top half and a bottom half by net **122**. Singles sideline **130** defines doubles alley **106** on the left and singles sideline **128** defines doubles alley **108** on the right. The top half of tennis court **8** is divided by service line **118** in an upper section of no man's land **124.** The lower section of the top half of tennis court **8** is divided by middle line **120** into right service box **114** and left service box **110.**

The bottom half of tennis court **8** is divided by service line **132** in a lower section of no man's land **126**. The upper section of the bottom half of tennis court **8** is divided by middle line **120** into left service box **112** and right service box **116.**

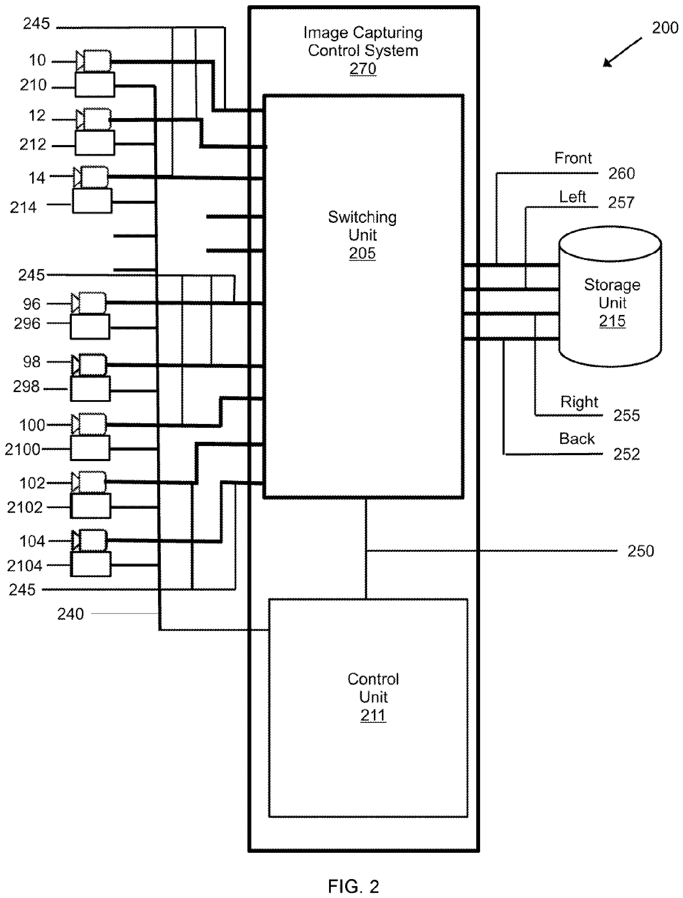

Shown in **Fig. 2** is a schematic representation of a system **200** comprising image capturing control system **270.** Image capturing control system **270** has switching unit **205** and control unit **211** connected with control line **250.** Image capturing control system **270** may include, in various embodiments, a computer or embedded computing circuitry (e.g., processor, memory, network interface, etc.). Connected to switching unit **205** are all the cameras (**10 to 104**) shown in **Fig. 1** with video feed output **245.** Not all the cameras shown in **Fig. 1** are shown in **Fig. 2** for ease of illustration. Switching unit **205** is also connected to storage unit **215** with video lines **260**, **257**, **255,** and **252.** Video line **260** carries the video feed **245** of the front image of the target and is captured by a primary camera. Video line **257** carries the video feed output of the left side image of the target and is captured by a secondary camera. Video line **255** carries the video feed of the right side image of the target and is captured by a secondary camera. Video line **257** carries the video feed output of the back image of the target and is captured by a secondary camera. Each camera **10 to 104** has a control data unit **210 to 2104.** As can be seen in **Fig. 2****,** camera **10** has control data unit **210,** camera **12** has control data unit **212**, camera **14** has control data unit **214**, etc.

The control data unit is used to control and read the data from a camera. The camera's parameters include the pan and tilt of the camera, zoom of the camera, the shutter speed, the lens opening, the focus of the lens and the frame rate of the camera. Each control data unit is connected to the control unit **211** with control data line **240.** Control unit **211** is connected to the switching unit **205** with control line **250.** First, the primary camera locks on and tracks the target. This can be accomplished, for example, by video processing in that the target is recognized, or the target can be outfitted with a directional transmitter or GPS or any combination thereof.

Control unit **211** may include, in various embodiments, a computer or embedded computing circuitry (e.g., processor, network interface, non-transitory computer readable media such as memory, etc.) in communication with the control data units, switching unit, and the like. Control unit **211** knows, via the parameters of the primary camera tracking the target, where the target is located in the scene, in this case a tennis court. Control unit **211** reads the parameters of the primary camera from the control data unit of the primary camera via control data line **240.** The primary camera captures, e.g., the front view of the target. Control unit **211** therefore selects the video feed **245** of the primary camera and via switching unit **205** connects it to video line **260** so that the front view of the target is stored on track of storage unit **215.** Control unit **211** also knows where the other cameras are located and what their field of view is. By knowing the parameters of the primary camera, the location of the target, and the location of the other cameras and of their fields of view, the control unit **211** can thus control cameras in order to capture a panoramic 360 degree view of the target. In the current example, that means that the left right and back side of the target also have to be captured. To capture the left, right and back side of the target, control unit **211** will make use of secondary cameras.

Control unit **211** then selects and activates the secondary camera that has the field of view in which the target is located. Starting with the left side, the selected secondary camera will generally be the camera with the best left side view (generally closest to the left side) of the target. The selection of the camera also depends on the location of the target in the scene. The control unit **211** sends to the secondary camera the location of the target so that the secondary camera can point towards and focus on and capture the left side of the target. Once the left side of the target is captured, the control unit **211** connects the video feed output **245** of that camera to video line **257.** The left side view of the target is stored on a track of storage unit **215.** The same is done with the right side view and back view of the target. In the end the best right side view of the target is stored on a track of storage unit **215** by video line **255** and the best back of the target is stored on a track of storage unit **215** by video line **252.**

In the description above, four sides of the target were captured. It should be understood that the capturing of four sides of the target is not the only possibility. The capturing of only two sides of the target or three sides or five or six sides or more also falls within the scope of the disclosure. In some embodiments, the more sides that are captured the more video lines that are needed to connect switching unit **205** to storage unit **215.**

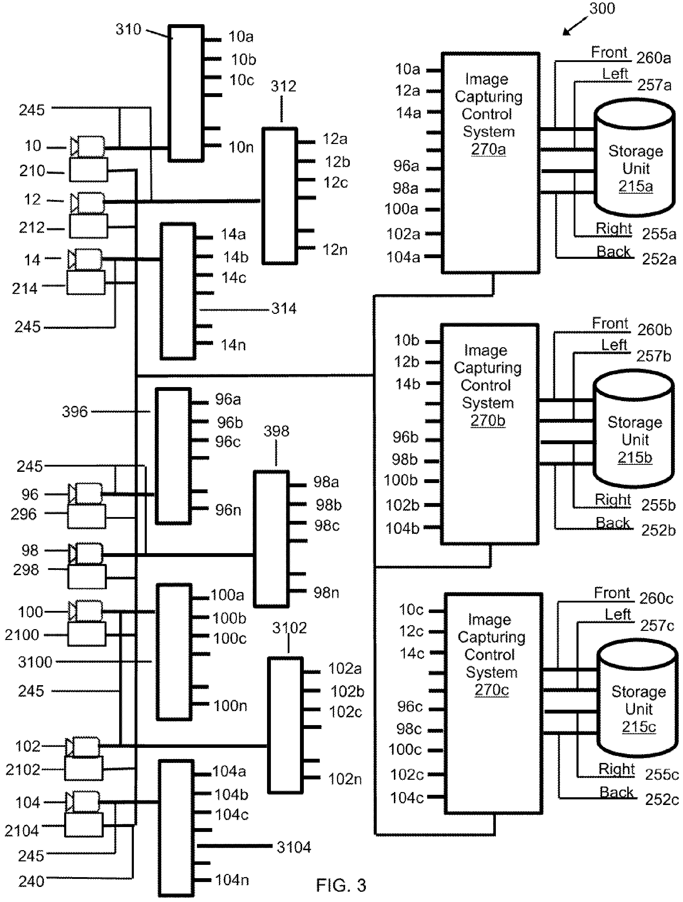

**Fig. 3** is a schematic diagram of a system **300** with more than one image capturing control system. **Fig. 3** resembles **Fig. 2**, the difference being that it has three image capturing control systems **270a**, **270b** and **270c**, each with storage unit **215a**, **215b**, and **215c.** Image capturing control system **270a** has a switching unit and control unit, which are not shown in **Fig. 3** but are similar to the corresponding elements of the image capturing control system **270** shown in **Fig. 2****.** The switching unit has video feed inputs **10a to 104a**, and video lines **260a**, **257a**, **255a** and **252a** are connected to storage unit **215a.** Control unit **211a** is connected to control data line **240.**

Similarly, image capturing control system **270b** has a switching unit and control unit. The switching unit has video feed inputs **10b to 104b**, and video lines **260b**, **257b**, **255a** and **252b** connected to storage unit **215b.** The control unit is connected to control data line 240.

Finally, image capturing control system **270c** has a switching unit and a control unit. The switching unit has video feed inputs **10c to 104c,** and video lines **260c**, **257c**, **255c** and **252c** connected to storage unit **215c.** The control unit is connected to control data line **240.**

The system **300** also has splitters **310 to 3104.** The splitters are connected to the video feeds **245** of the cameras. The splitters split the video feed outputs of the cameras into n video feed outputs. Splitter **310** is connected to the video feed **245** of camera **10** and splits the video feed **245** into **n** outputs **10a to 10n.** Splitter **312** splits camera **12's** video feed output **245** into **n** outputs **12a to 12n.** The other splitters operate similarly for the other cameras. Splitting the video feeds **245** of each camera into **n** feeds means that **n** image capturing control systems can be connected to the system **300.** As mentioned, three image capturing control systems are shown **Fig. 3****.**

The splitters are connected to the image capturing control systems. So, for example, video feed **10a** is provided as input to image capturing control system **270a.** Video feed **12a** is provided as input to image capturing control system **270a**, and so on. In this manner the video feed **245** of each camera **12** is connected to image control system **270a.** In this way all the cameras are connected to image capturing control system **270a.**

The same holds true for image capturing control system **270b.** Video feed **10b** of splitter **310** is provided as input to image capturing control system **270b.** Video feed **12b** of splitter **312** is provided as input to image capturing control system **270b**, and so on. In this manner image capturing control system **270b** is connected to all the video feeds **245** of all the cameras.

Image capturing control system **270c** is connected to all the video cameras in the same manner.

To explain the camera selection in more detail, reference is made to **Fig. 1****.** In the case of a singles tennis match, a target a is a first player in the top part of the tennis court **8** located in no man's land **124.** In order to track the first player, first image capturing control system **270a** in **Fig. 3** will use camera **66** as the primary camera. Camera **66** therefore locks on and tracks target **a** and points towards target **a.** Camera **66** captures the front view of target **a.**

His opponent, target **b,** is a second player in the bottom part of the tennis court **8** in no man's land **126.** In order to track the second player, second image capturing control system **270b** in **Fig. 3** will use camera **18** as the primary camera. Camera **18** therefore locks on and tracks target **b** and points towards target **b.** Camera **18** captures the front view of target **b.**

A control unit of first image capturing control system **270a** in **Fig. 3** reads the parameters of the primary camera **66.** The control unit knows the location of target **a** on tennis court **8** and accordingly automatically activates and controls secondary cameras to increase the area of coverage of the target **a** so that a more all-around panoramic view is obtained from target **a.**

The control unit of first image capturing control system **270a** activates and controls camera **20** in **Fig. 1** to get a back view of target **a.** The control unit will send the location information of target **a** to camera **20** so that it can point towards and focus and capture the back view of target **a.** The control unit will do the same with camera **30** to capture the right side view of target **a** and with camera **102** to capture the left side view of target **a.** As mentioned before, the activation and control of only four cameras to capture a target is not the only possibility. For example, the activation and control of camera **26** to capture an in between back right view and the activation of camera **10** to capture an in between back to left view of target **a** also falls within the scope of this disclosure.

A control unit of second image capturing control system **270b** in **Fig. 3** will do the same for target **b.** It will read the parameters of the primary camera **18.** The control unit of second image capturing control system **270b** will know the location of target **b** on tennis court **8** and will accordingly automatically activate and control secondary cameras to increase the area of coverage of the target **2.** The control unit of second image capturing control system **270b** will activate and control camera **68** to get a back view of target **b.** Remember camera 66 is controlled to capture the front view of target a. The control unit of second image capturing control system **270b** will send the location information of target **b** to camera **68** so that it can point towards, focus and capture the back view of target **b**, to camera **78** to capture the right side view of target **b**, and to camera **54** to capture the left side view of target **b.**

As target **a** moves forward towards net **122**, primary camera **66** pointing towards and tracking target **a** will detect this changing location. The control unit of first image capturing control system will also detect this movement via a control data unit of primary camera **66** and correspondingly deactivate cameras **30** and **102** that initially captured the right and left sides of target **a** as target **a** moves out of their field of view, and activate cameras **32** and **100** to capture the right and left sides of as target **a** as target **a** moves forward into their field of view.

It can be said that the camera **30** hands over to camera **32** as target a moves out of the capture area of camera **30** and into the field of view of camera **32.** Similarly, it can be said that the camera **102** hands over to camera **100 as** target a moves out of the field of view of camera **102** and into the field of view of camera **100.**

When target **a** reaches service line **118,** cameras **32** and **100** will be deactivated as target **a** moves out of their field of view. Cameras **34** and **98** will be activated to capture the right and left sides of target **a** in its new location. If target **a** moves to the middle of right service box **114**, the cameras of its previous location will be deactivated as target **a** moves out of the field of view of the previous cameras. Camera **38** will be activated to capture its right side, camera **94** will be activated capture each left side and camera **22** will be activated to capture the back of target a. Correspondingly, if target **a** moves to the left service box **110** and close to net **122**, cameras capturing its previous location will be deactivated as target **a** moves out of the field of view of these cameras. Camera **40** will be activated to capture the right side of target a, camera **92** will be activated to capture the left side of target **a** and camera **14** will be activated to capture the back of target **a.** The primary camera **66** remains locked on and pointing towards target **a** as it keeps on tracking target **a.** One of the reasons is because the primary camera **66** records the location of target **a.** This location information is sent by a control data unit of the primary camera **66** to the control unit. The control unit sends the location information to the control data unit of a particular secondary camera. This enables the secondary camera to point towards and track a target.

The pointing of a camera means that the pan and tilt of the camera is adjusted so that the camera is directed towards the target and the target is in the field of view of the target. Activating a camera means turning a camera on if it is switched off and taking control of a camera. Deactivating a camera does not necessarily mean turning a camera off but it means releasing control of the camera and making it available for another control unit.

The control unit of second image capturing control system **270b** will do the same with second player or target **b.** If target **b** is in the middle of no man's land **126**, camera **52** will be activated to capture its left side and camera **80** will be activated to capture its right side. Camera **68** will be activated to capture target **b**'s back view. Camera **18**, which is the primary camera, will capture target **b**'s front view.

If target **b** moves to the middle of left service box **112**, camera handover will occur, and cameras will be deactivated and activated as described above up and until target **b** reaches the middle of left service box **112.** Once target **b** reaches the middle of left service box **112**, camera **46** will capture its left side, camera **86** will capture its right side and camera **62** will capture its back view. If target **b** moves over to the middle of right service box **116**, camera handover will occur until eventually camera **70** captures the back view.

If the ball is to be tracked, that means there is a third target, target **c.** This means that a third image capturing control system **270c** in fig. **3** will be required in this example.

In the case of a doubles match, an extra two players and two more targets, a target **d** and a target **e** are to be considered. This means that a fourth and fifth image capturing control systems will be required in this example. In the case of a doubles match there are therefore five targets that are tracked simultaneously. It is of course possible to track one or more targets manually via the primary camera. As each target Is allocated a primary camera and corresponding secondary cameras this leads to a more elaborate coverage of the scene in general than would have been the case of a normal television team and personnel manually covering the scene.

A conflict can of course arise between the control units of two image capturing control systems to have control over a secondary camera. This dispute is then resolved with priority rules. For example, in a game of doubles players three and four are a team on one side and are located in the bottom half of the tennis court **8.** Player three is target **d** and player four is target **e.** Target **d** is in the middle of left service box **112** in **Fig. 1** and target **e** is in the middle of right service box **116.** Both targets are the same distance from the net **122.** A control unit would therefore activate and control camera **46** to cover the left side of target **d.** The control unit would activate and control camera **86** to cover the right side of the target **d.** However, another control unit would also like to have control over camera **86 to** cover the right side of target e. To resolve this conflict between the two control units, a priority rule can be used. For example, a priority rule may determine that considering that camera **86** is closer to target **e**, target e has priority over camera **86,** therefore the control unit associated with target **e** is granted control over camera **86**, To cover the right side of target **d** in the left service box **112**, the control unit associated with target **d** has to make use of the next-in-line camera, namely camera **84.**

During the capturing and recording of the target as well as the all-around view of the target, metadata such as time also is recorded. As each target has an all-around view of the target and the time captured and recorded, it is now possible to go back in time to see and analyze what happened at a particular time. So, for example in a tennis match, it is possible during a replay action to go back in time when the ball hit the tennis court to see if the ball landed in the service box during the service by a particular player.

### Generating Virtual Cameras by Interpolation

Although, as shown in **Figs. 2** and **3**, the image capturing control system **270** may produce a front **260**, left **257**, right **255**, and back **252** image of the target with real cameras, some embodiments may also be enhanced with the use of virtual cameras inserted between the real cameras. If less than a desired number of real camera positions are available, or if a greater resolution of image rotation is desired, additional virtual cameras could be implemented to interpolate camera images in between two existing real cameras.

For example, in the discussion above with reference to **Fig. 1**, target **a** was in the top part of tennis court **8** located in the middle of no man's land **124.** Primary camera **66** was used to capture the front view of target **a.** Camera **20** in **Fig. 1** was used to capture the back view of target **a.** Camera **30** was used to capture the right side view of target **a.** Camera **102** was used to capture the left side view of target **a.** Cameras **66** capturing the front view of target **a**, camera **20** capturing the back view of target **a**, camera **30** capturing the right view of target **a**, and camera **102** capturing the left view of target **a** are all real, physical cameras as opposed to virtual, software cameras.

Software may be used to create virtual cameras between the real cameras. In some embodiments, the software compares the view depicted in each frame from one real camera with the corresponding view in the adjacent real camera. To create a virtual camera between these two real cameras **66** (front view) and camera **30** (right view), the software interpolates between the views captured by the real cameras to form a virtual view associated with a virtual camera. This may include, e.g., calculating a position of the virtual camera and calculating a corresponding field of view of the scene. The software may use computer vision techniques to detect the position, color, and intensity of light sources, the shape, position, texture, color, reflectance, etc., of objects in the scene, shadows, and other characteristics of the scene in images captured by the real cameras. Based on this information, the software may recreate the scene from the perspective of the virtual camera based on the calculated position and field of view of the virtual camera.

The resulting virtual image does not necessarily represent any real-world image that could be taken. Instead, the virtual image provides a smoother transition between images when the image is rotated from the first real camera to the second real camera. Therefore, when spinning through the cameras **66** and **30** the resolution is increased due to the extra virtual camera between them.

In some embodiments, the interpolation of the views may include some pixel-by-pixel interpolation of color values. In an illustrative scenario, such as where two real cameras capture a similar field of view, the software interpolates the color of each pixel in one or more portions of a virtual frame to be a transition color between the colors of two corresponding pixels in the frames captured by the real cameras. If the two cameras (e.g., cameras **66** and **30**) have corresponding pixels of the same color, the virtual image will have that same color. If the two cameras **66** and **30** have pixels of different colors, these colors are analyzed, and a transition color is used. This transition color may be determined based on the values for red, green, and blue, such as by averaging the pixel values in these color channels, or by some other means.

Although this feature has been described with the production of a single virtual image between two adjacent real cameras **66** and **30**, there could also be two or more virtual images interpolated in this gap. The color transition may be scaled to utilize any number of virtual images, and the present disclosure is not limited to any particular number of virtual images.

### Combining of Images

All the images of a target can be, by means of image processing, combined to form a full 360 degree panoramic view of a target. In some embodiments, the cameras implement meshification techniques using depth image capturing devices configured to capture depth information that is used to generate 3D meshes of the targets. Such 3D meshes from the different perspectives of the targets are then sent to an image processing device for combining into a 3D mesh of the target. In some embodiments, audio capturing devices may further send audio data that is sent along with the 3D meshes of the target. Sending the images in the form of 3D meshes can save bandwidth and processing time at the moment of sending the images to the image processing device and when sending the combined 3D mesh to any other receiving device at a later step. The image processing and combination can be done in the primary camera. Thus, in one embodiment, one or more secondary cameras send the 3D meshes of their respective angles of a target to the primary camera, which combines the 3D meshes for forming the 360 degree panoramic view of the target. This panoramic view or 3D meshes are then sent to the storage unit which may be located in a server. The panoramic view or 3D meshes can then be sent to a receiving device for display in a rendered virtual environment.

In some embodiments, the 3D meshes define a depth image comprising volumetric information of a target in the scene. The 3D meshes may be compressed before being sent for further processing and combination at the primary camera. The primary camera then sends the compressed 3D meshes to a receiving device configured to reconstruct the scene from the 3D meshes. The primary camera may, alternatively, send the compressed 3D meshes to a server for further processing before sending over to the receiving device. In some embodiments, the 3D meshes, before being compressed, are synchronized with the audio data at the primary camera, and then are compressed altogether and sent to the receiving device (e.g., directly or via the server).

In some embodiments, the generation of the 3D meshes comprises converting the depth image into a colorless point cloud wherein the depth information of the scene is encoded in a dimension of said point cloud; converting the point cloud into a three-dimensional mesh comprising a plurality of triangles and vertices by using Poisson surface algorithms; and compressing the 3D mesh. The compression of the 3D meshes can be performed based on a plurality of settings that may be controlled by a configuration application implemented by the primary camera or by the server. The configuration application can, for example, configure settings such as the framerate, field-of-view and spatial resolution of the transmission.

In some embodiments, the depth information is captured by a depth sensing module that comprises an infrared emitter and at least two infrared (IR) sensors and, provided that the distance between both sensors is known, the distance between the module and the grid of IR points projected onto the environment by the emitter can be precisely calculated. Alternatively, in certain embodiments of the invention the depth sensing module comprises a LIDAR (Light Detection and Ranging) sensor. Advantageously, the IR or LIDAR sensors provide depth images representative of a scene or a field-of-view thereof. The LIDAR sensor comprises both the emission and detection steps of a laser source suitable for inspecting the scene.

In yet another embodiment of the invention, the audio acquisition module comprises a cardioid unidirectional microphone and/or a surround sound equipment. Particularly, the cardioid microphone provides a better detection of the audio from a source in front of the microphone, which is convenient when it comes to acquire the audio input from a speaker (person) in a videoconference as further disclosed below. In those cases, the environmental sound must be attenuated, and this kind of microphone carries out this task conveniently. Otherwise, when the environmental sound needs to be broadcasted, then a surround system equipment can be used instead.

### Video Conferencing

This system can also be used for the purposes of video conferencing. In such a case each participant in the video conference is a target and will be allocated a primary camera. Secondary cameras will capture the sides of each of the participants in the video conference. Furthermore, the background of the participants can be removed. The images of the participants can then be transferred in a virtual environment displaying a live event in the virtual environment that allows video conferencing. This will allow a fellow participant to walk through the scene of the video conference and view the other participants from different perspectives.

In one example of video conferencing, the system can be used to bring a live event such as a football or tennis match into a video conferencing setting in a 3D virtual environment comprising also an audience located in the same 3D virtual environment. The 3D virtual environment may be a replica of the sports stadium and corresponding sports pitch or court, which can be a 3D model of the same. In this example, using the image capturing system of the current disclosure, the players are dynamically and automatically captured and combined into 3D meshes or 360° panoramic views that are overlaid on top of the virtual environment where the audience can view the live events and communicate with each other through a videoconferencing platform by sharing audio and video data of each other. Further in this example, the audience is also provided with at least one primary camera and a plurality of secondary cameras that capture the images of the participants from their current locations; remove their backgrounds; and then send to the image processing unit that combines the images before sending them to the server for further processing. The combined images are then sent to a receiving device rendering the virtual environment, where the 3D meshes or 360° panoramic views of the players and the audience are reconstructed at the receiving device and overlaid on top of the virtual environment. For example, the audience 3D representations may be positioned on the seats of the sports stadium and may be able to view the game as it develops live. The ability to control the different cameras of the system to provide 3D representations in the form of 3D meshes or 360° panoramic views of generally moving players creates a faithful representation of a live event. Likewise, providing the faithful 3D representations of the audience in the same 3D virtual environment improves the sense of virtual presence of the audience.

In some embodiments, the location and the capture area of the cameras will have to be established and made available to the control unit in an understandable format. Furthermore, the parameters of the cameras will have to be calibrated. In particular the focus and zoom parameters require considerable attention so that the control unit can focus and zoom the cameras and keep the images captured by the cameras more or less at the same size and in focus.

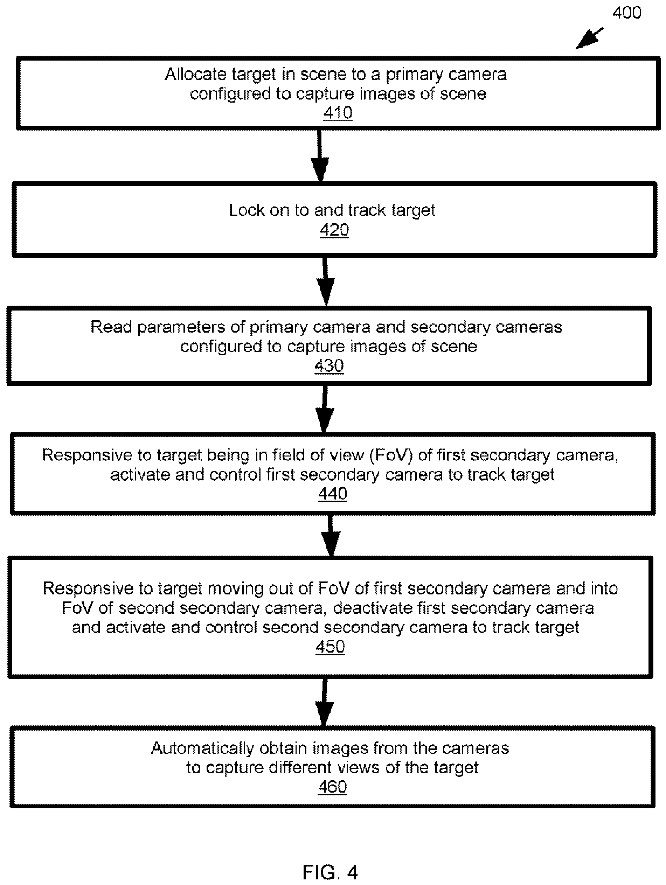

**Fig. 4** is a flow chart of an illustrative method **400** for controlling a plurality of cameras. The method may be performed by a computer system such as the image capturing control system **270** of **Fig. 2**, or some other computer system. At step **410**, the computer system allocates a target in a scene to a primary camera configured to capture images of the scene. At step **420**, the system locks on to and tracks the target. At step **430**, the system reads parameters of the primary camera and second secondary cameras configured to capture images of the scene. At step **440**, responsive to the target being in the field of view of a first secondary camera, the system activates and controls the first secondary camera to track the target. At step **450**, responsive to the target moving out of the field of view of the first secondary camera and into the field of view of a second secondary camera, the system deactivates the first secondary camera and activates and controls the second secondary camera to track the target. Priority rules may be used to resolve conflicts over activation and control of the secondary cameras based on, e.g., relative distance between the target and the respective secondary camera, profile data of the target, or other criteria or combinations of criteria. At step **460**, the system automatically obtains images with the cameras to capture different views of the target, such as views provided by the primary camera and each of the secondary cameras. Control data units may be used to connect to the individual cameras and provide parameters of the corresponding cameras to a control unit.

In some embodiments, the method further comprises allocating a second target in the scene to a second primary camera. In such embodiments, images of the respective targets may be captured simultaneously, or substantially simultaneously.

In some embodiments, the method further comprises implementing one or more virtual cameras configured to provide camera views interpolated from views obtained by one or more real, physical cameras, such as the primary or secondary cameras.

While illustrative embodiments have been illustrated and described, it will be appreciated that various changes can be made therein without departing from the scope of the invention.

Aspects of the disclosure are set out in the following numbered clauses:
Clause 1. An image capturing system for controlling a plurality of cameras, the system comprising:
   a primary camera configured to capture images of a scene having a target;
   first and second secondary cameras configured to capture images of the scene; and
   a control unit connected to and receiving parameters from the cameras and configured to automatically select and activate the cameras and to allocate the target to the cameras;
   wherein when the primary camera is allocated the target in the scene, the primary camera locks on and tracks the target;
   wherein, responsive to the target being in a field of view of the first secondary camera, the control unit activates and controls the first secondary camera to track the target;
   wherein responsive to the target moving out of the field of view of the first secondary camera and into a field of view of the second secondary camera, the control unit deactivates the first secondary camera and activates and controls the second secondary camera to track the target; and
   wherein the cameras are configured to capture different views of the target.
Clause 2. The system of clause 1 further comprising a second primary camera configured to capture images of the scene,
   wherein the system is configured to capture images of multiple targets simultaneously.
Clause 3. The system of clause 2, wherein each target is allocated a control data unit that connects to corresponding cameras, the control data units being configured to provide parameters of each camera to the control unit.
Clause 4. The system of clause 3, wherein conflict between two control data units over activation and control of secondary cameras is resolved by priority rules.
Clause 5. The system of clause 4, wherein the priority rules are based on relative distance between the targets and the secondary cameras, or profile data of the targets, or combinations thereof.
Clause 6. The system of clause 1 further comprising one or more virtual cameras configured to provide camera views interpolated from views obtained by one or more of the primary or secondary cameras.
Clause 7. The system of clause 1 wherein the primary camera comprises computer circuitry programmed to combine the images to form a panoramic view of the target and to send the combined image to a server for further processing.
Clause 8. The system of clause 1 wherein the primary camera comprises computer circuitry programmed to remove background from the images.
Clause 9. The system of clause 8, wherein the computer circuitry of the primary camera is further programmed to transfer the images into a virtual environment rendered by a receiving device.
Clause 10. The system of clause 9, wherein the virtual environment enables hosting videoconferencing sessions, wherein the images rendered in the virtual environment represent participants of a videoconferencing session.
Clause 11. The system of clause 1, wherein the control unit is located within the primary camera.
Clause 12. The system of clause 1, wherein the primary and secondary cameras are configured to capture depth information and convert the depth information into 3D meshes.
Clause 13. The system of clause 12, wherein the secondary cameras are configured to send the 3D meshes to the primary camera, wherein the primary camera is configured to process, combine and compress the 3D meshes before sending the compressed 3D meshes to a receiving device.
Clause 14. A method for controlling a plurality of cameras, the method comprising:
   allocating a target in a scene to a primary camera configured to capture images of the scene; locking on to and tracking the target;
   reading, by a control unit, parameters of the primary camera and of first and second secondary cameras configured to capture images of the scene;
   responsive to the target being in a field of view of the first secondary camera, activating and controlling the first secondary camera to track the target;
   responsive to the target moving out of the field of view of the first secondary camera and into a field of view of the second secondary camera, deactivating the first secondary camera and activating and controlling the second secondary camera to track the target; and
   automatically obtaining images from the cameras to capture different views of the target.
Clause 15. The method of clause 14, further comprising:
   allocating a second target in the scene to a second primary camera; and
   capturing images of the targets simultaneously.
Clause 16. The method of clause 15, further comprising:
   allocating a control data unit that connects to corresponding cameras; and
   providing, by the control data unit, parameters of each camera to the control unit.
Clause 17. The method of clause 15, further comprising providing priority rules configured to resolve conflicts over activation and control of the secondary cameras.
Clause 18. The method of clause 1 wherein the primary and secondary cameras are configured to capture depth information and convert the depth information into 3D meshes, wherein the secondary cameras are configured to send the 3D meshes to the primary camera, wherein the primary camera is configured to process, combine and compress the 3D meshes before sending the compressed 3D meshes to a receiving device.
Clause 19. The method of clause 15 further comprising implementing one or more virtual cameras configured to provide camera views interpolated from views obtained by one or more of the primary or secondary cameras.
Clause 20. A non-transitory computer-readable medium having stored thereon computer-executable instructions configured to, when executed, cause one or more computing devices to perform steps comprising:
   allocating a target in a scene to a primary camera configured to capture images of the scene;
   locking on to and tracking the target;
   reading, by a control unit, parameters of the primary camera and parameters of first and second secondary cameras configured to capture images of the scene;
   responsive to the target being in a field of view of the first secondary camera, activating and controlling the first secondary camera to track the target;
   responsive to the target moving out of the field of view of the first secondary camera and into a field of view of the second secondary camera, deactivating the first secondary camera and activating and controlling the second secondary camera to track the target; and
   automatically obtaining images with the cameras to capture different views of the at least one target.

## Claims

1. An image capturing system for controlling a plurality of cameras, the system comprising:
a primary camera configured to capture images of a scene having a target;
first and second secondary cameras configured to capture images of the scene; and
a control unit connected to and receiving parameters from the cameras and configured to automatically select and activate the cameras and to allocate the target to the cameras;
wherein when the primary camera is allocated the target in the scene, the primary camera locks on and tracks the target;
wherein, responsive to the target being in a field of view of the first secondary camera, the control unit activates and controls the first secondary camera to track the target;
wherein responsive to the target moving out of the field of view of the first secondary camera and into a field of view of the second secondary camera, the control unit deactivates the first secondary camera and activates and controls the second secondary camera to track the target; and
wherein the cameras are configured to capture different views of the target.

2. The system of claim 1 further comprising a second primary camera configured to capture images of the scene,
wherein the system is configured to capture images of multiple targets simultaneously.

3. The system of claim 2, wherein each target is allocated a control data unit that connects to corresponding cameras, the control data units being configured to provide parameters of each camera to the control unit.

4. The system of claim 3, wherein conflict between two control data units over activation and control of secondary cameras is resolved by priority rules; and
preferably, wherein the priority rules are based on relative distance between the targets and the secondary cameras, or profile data of the targets, or combinations thereof.

5. The system of claim 1 further comprising one or more virtual cameras configured to provide camera views interpolated from views obtained by one or more of the primary or secondary cameras.

6. The system of claim 1 wherein the primary camera comprises computer circuitry programmed to combine the images to form a panoramic view of the target and to send the combined image to a server for further processing.

7. The system of claim 1 wherein the primary camera comprises computer circuitry programmed to remove background from the images.

8. The system of claim 7, wherein the computer circuitry of the primary camera is further programmed to transfer the images into a virtual environment rendered by a receiving device; and
preferably, wherein the virtual environment enables hosting videoconferencing sessions, wherein the images rendered in the virtual environment represent participants of a videoconferencing session.

9. The system of claim 1, wherein the control unit is located within the primary camera.

10. The system of claim 1, wherein the primary and secondary cameras are configured to capture depth information and convert the depth information into 3D meshes; and
preferably, wherein the secondary cameras are configured to send the 3D meshes to the primary camera, wherein the primary camera is configured to process, combine and compress the 3D meshes before sending the compressed 3D meshes to a receiving device.

11. A method for controlling a plurality of cameras, the method comprising:
allocating a target in a scene to a primary camera configured to capture images of the scene;
locking on to and tracking the target;
reading, by a control unit, parameters of the primary camera and of first and second secondary cameras configured to capture images of the scene;
responsive to the target being in a field of view of the first secondary camera, activating and controlling the first secondary camera to track the target;
responsive to the target moving out of the field of view of the first secondary camera and into a field of view of the second secondary camera, deactivating the first secondary camera and activating and controlling the second secondary camera to track the target; and
automatically obtaining images from the cameras to capture different views of the target.

12. The method of claim 11, further comprising:
allocating a second target in the scene to a second primary camera; and
capturing images of the targets simultaneously.

13. The method of claim 12, further comprising:
allocating a control data unit that connects to corresponding cameras; and
providing, by the control data unit, parameters of each camera to the control unit; or
further comprising providing priority rules configured to resolve conflicts over activation and control of the secondary cameras; or
further comprising implementing one or more virtual cameras configured to provide camera views interpolated from views obtained by one or more of the primary or secondary cameras.

14. The method of claim 11 wherein the primary and secondary cameras are configured to capture depth information and convert the depth information into 3D meshes, wherein the secondary cameras are configured to send the 3D meshes to the primary camera, wherein the primary camera is configured to process, combine and compress the 3D meshes before sending the compressed 3D meshes to a receiving device.

15. A non-transitory computer-readable medium having stored thereon computer-executable instructions configured to, when executed, cause one or more computing devices to perform steps comprising:
allocating a target in a scene to a primary camera configured to capture images of the scene;
locking on to and tracking the target;
reading, by a control unit, parameters of the primary camera and parameters of first and second secondary cameras configured to capture images of the scene;
responsive to the target being in a field of view of the first secondary camera, activating and controlling the first secondary camera to track the target;
responsive to the target moving out of the field of view of the first secondary camera and into a field of view of the second secondary camera, deactivating the first secondary camera and activating and controlling the second secondary camera to track the target; and
automatically obtaining images with the cameras to capture different views of the at least one target.
